# EUROPEAN PATENT SPECIFICATION

(11) **EP 0 969 128 B1**
(45) Date of publication and mention of the grant of the patent: **19.11.2003**
(21) Application number: 99118020.9
(22) Date of filing: 26.01.1989
(51) Int. Cl.: D01F 9/127, C04B 35/622

(54) **Carbon fibrils**
Kohlenstofffibrillen
Fibrilles de carbone

(30) Priority: 28.01.1988 US 149573
(43) Date of publication of application: 05.01.2000
(62) Divisional of application: 89902672.8
(73) Proprietor: HYPERION CATALYSIS INTERNATIONAL, INC., Lexington, MA 02173 (US)
(72) Inventor: Snyder, Carl E., Silver Lake, OH 44224 (US); Mandeville, W. Harry, Lynnfield, MA 01940 (US); Tennent, Howard G., Kennet Square, PA 19348 (US); Truesdale, Larry K., North Andover, MA 01845 (US); Barber, James J., Arlington, MA 01274 (US)
(74) Representative: HOFFMANN - EITLE

(56) References cited:
- WO-A-87/07559
- WO-A-89/07163
- US-A- 4 663 230
- A. Oberlin et al., Journal of Crystal Growth, vol. 32 (1976), p. 335-349
- R.T.K. Baker et al., Journal of Catalysis, vol. 30 (1973), p. 86-95

## Description

### Background of the Invention

This invention relates to carbon fibrils.

Carbon deposits generally occur in three major forms: amorphous, platelet, and vermicular. Carbon fibrils are vermicular carbon deposits having diameters less than 500 nanometers. These fibrils exist in a variety of forms, including filaments (solid core) and tubes (hollow core), and have been prepared through the catalytic decomposition at metal surfaces of various carbon-containing gases.

Tennent, U.S. 4,663,230, describes carbon fibrils that are free of a continuous thermal carbon overcoat and have multiple graphitic outer layers that are substantially parallel to the fibril axis. They are prepared by contacting a carbon-containing gas with an iron, cobalt, or nickel-containing catalyst at a temperature between 850 and 1200°C.

According to A. Oberlin *et al*., J. Crystal Growth, 32 (1976), p.335-349, carbon fibres have been prepared by pyrolysing a mixture of benzene and hydrogen at about 1100°C. They have been studied by high resolution electron microscopy. These fibres have various external shapes and contain a hollow tube with a diameter ranging from 20 to more than 500 Angstrom along the fibre axis. They consist of turbostratic stacks of carbon layers, parallel to the fibre axis, and arranged in concentric sheets like the "annual ring structure of a tree". These fibres have two textures resulting from different growth processes; core regions, made of long, straight and parallel carbon layers, are primarily formed by catalytic effect; the external regions correspond to a pyrolytic deposit occurring during the secondary thickening growth process. Very small cementite crystals, typically about 100 Angstrom in diameter, have been identified by dark-filed techniques at the tip of the central tube of each fibre. A model of fibre growth related to a surface diffusion of carbon species on the catalyst particle has been established.

### Summary of the Invention

The invention features a volume of fibrils of the general sort described by Tennent (US 4,663,230) above.

The invention relates to a volume of carbon fibrils wherein at least 50wt% of said fibrils have a morphology consisting of hollow vermicular tubes that
(i) have graphitic layers that are substantially parallel to the fibril axis, wherein the length of the projection of graphitic layers on the fibril axis extends along the axis for a distance of at least two fibril diameters,
(ii) have a wall thickness between 0.1 and 0.4 times the external diameter of said fibrils,
(iii) have a diameter which does not vary by more than 15% over a length of at least three f ibril diameters, and
(iv) have less than 50% of their surface areas covered by a continuous thermal carbon overcoat.

The predominant morphology along the length of an individual carbon fibril is that of vermicular tube being free of a continuous thermal carbon (i.e. pyrolytically deposited carbon resulting from thermal cracking of the gas feed used to prepare the fibrils) overcoat to the extent defined above and having graphitic layers that are substantially parallel to the fibril axis. The total surface area covered by the thermal overcoat is less than 50%, more preferably 25%, and most preferably less than 5%, and the length of the projection of .the graphitic layers on the fibril axis extends along the axis for a distance of at least two (preferably at least five or more) fibril diameters. In a volume of carbon fibrils, at least 50%, more preferably at least 75% have the above-described morphology.

The fibrils are prepared by contacting a metal catalyst with a carbon-containing gas in a reactor at reaction conditions including temperature sufficient to produce the fibrils with the above-described morphology. Preferred reaction temperatures are 400 - 850°C, more preferably 600-750°C. The fibrils are preferably prepared continuously by bringing the reactor to the reaction temperature, adding metal catalyst particles, and then continuously contacting the catalyst with the carbon-containing gas. Examples of suitable gases include aliphatic hydrocarbons, e.g., ethylene, propylene, propane, and methane; carbon monoxide; aromatic hydrocarbons, e.g., benzene, naphthalene, and toluene; and oxygenated hydrocarbons. The fibrils are preferably grown throughout the volume of the reactor (as opposed to being limited to the reactor walls), with the weight to weight ratio of fibrils to the metal content of the catalyst preferably ranging from 1:1000 to 1000:1. Specifically, it is preferred in this order that the process produces at least the following weight ratios of fibril per metal content of catalysts: 1/1000, 1/100, 1/10, 1/1, 10/1, 100/1 and 1000/1.

. Preferred catalysts are non-aqueous (i.e., they are prepared using non-aqueous solvents) and contain iron and, preferably, at least one element chosen from Group V (e.g., vanadium), VI (e.g., molybdenum, tungsten, or chromium), VII (e.g., manganese), or the lanthanides (e.g., cerium). Non-aqueous catalysts are preferred because they offer good reproducability and do not require careful control of pH or the catalyst's thermal history. The catalyst, which is preferably in the form of metal particles, may be deposited on a support, e.g., alumina (preferably fumed alumina). These catalysts are useful for the production of carbon fibrils generally, as well as fibrils of the sort described by Tennent. It is preferred that, if the catalyst is iron or iron-chromium particles deposited on fumed alumina, the carbon containing gas is ethylene and the temperature is between 600-750°C. Preferably, the chromium content of the catalyst is less than 8 wt%. Specifically, it is preferred if a catalyst that includes iron and molybdenum, cerium or manganese, alone or in combination, but has less than 8 wt% chromium is used.

The carbon fibrils thus prepared have a length-to-diameter ratio of at least 5, and more preferably at least 100. Even more preferred are fibrils whose length to diameter ratio is at least 1000. The wall thickness of the fibrils is about 0.1 to 0.4 times the fibril external diameter.

The external diameter of the fibrils preferably is between 3.5 and 75 nm. In terms of fibril diameter distribution, a useful amount of the fibrils (as determined by the particular application envisioned) having the desired morphology have diameters within a predetermined range, preferably 3.5-75 nm. Preferably, at least 10%, more preferably 50%, and, even more preferably, 75% of the fibrils have diameters falling within this range: The external fibril diameter does not vary by more than 15% over a length of at least 3 fibril diameters (preferably at least 10 diameters, more preferably at least 25).

The invention provides carbon fibrils having a morphology and microstructure (substantially parallel graphitic layers, high length-to-diameter ratio, preferably a lack of continuous thermal carbon overcoat) that impart good mechanical properties, e.g., tensile strength. The relatively low temperatures used, coupled with the ability to utilize the entire reactor volume, makes the process economical and efficient.

The fibrils are useful in a variety of applications. For example, they can be used as reinforcements in fiber-reinforced composite structures or hybrid composite structures (i.e. composites containing reinforcements such as continuous fibers in addition to fibrils). The composites may further contain fillers such as carbon black and silica, alone or in combination with each other. Examples of reinforceable matrix materials include inorganic and organic polymers; ceramics (e.g., Portland cement), carbon, and metals (e.g., lead or copper). When the matrix is an organic polymer, it may be a thermoset resin such as epoxy, bismaleimide, polyimide, or polyester resin; a thermoplastic resin; or a reaction injection molded resin. The fibrils can also be used to reinforce continuous fibers. Examples of continuous fibers that can be reinforced or included in hybrid composites are aramid, carbon, and glass fibers, alone or in combination with each other. The continuous fibers can be woven, knit, crimped, or straight.

The composites can exist in many forms, including foams and films, and find application, e.g., as radiation absorbing materials (e.g., radar or visible radiation), adhesives, or as friction materials for clutches or brakes. Particularly preferred are fibril-reinforced composites in which the matrix is an elastomer, e.g., styrene-butadiene rubber, cis-1,4-polybutadiene, or natural rubber; such elastomer-based composites may further contain fillers such as carbon black and silica, alone or in combination. These composites (with or without carbon black or silica fillers) are useful when shaped in the form of a tire; the fibrils allow more oil to be added to the tire.

In addition to reinforcements, the fibrils may be combined with a matrix material to create composites having enhanced thermal and electrical conductivity,and optical properties. Furthermore, the fibrils can be used to increase the surface area of a double layer capacitor plate or electrode. They can also be formed into a mat (e.g., a paper or bonded non-woven fabric) and used as a filter, insulation (e.g., for absorbing heat or sound), reinforcement, or adhered to the surface of carbon black to form "fuzzy" carbon black. Moreover, the fibrils can be used as an adsorbent, e.g., for chromatographic separations.

It has also been discovered that composites reinforced with a volume of carbon fibrils that are vermicular tubes having diameters less than 500 nanometers can be prepared in which the amount of the fibril volume in the composite is significantly less (e.g., less than 50 parts, preferably less than 25 parts, more preferably less than 10 parts) compared to other types of reinforcements that, surprisingly, exhibit good mechanical properties (e.g., modulus and tear strength) despite the lower amount of reinforcement.

Other features and advantages of the invention will be apparent from the following description of the preferred embodiments thereof, and from the claims .

### Description of the Preferred Embodiments

We first describe the figures.
Fig. 1 is a plan view of a portion of a fibril embodying the invention.
Fig. 2 is a plan view of a portion of a fibril without substantially parallel graphitic layers.

### Preparation

The preparation of carbon fibrils is described by way of the following examples.

### Example 1

Carbon fibrils are prepared by feeding, either by gravity or gas injection (e.g., using an inert gas), metal-containing catalyst particles into a stream of carbon-containing gas in a vertical tube reactor at about 550-750°C; the catalyst particles can also be formed in situ through decomposition of a precursor compound, e.g., ferrocene. The reactor includes a quartz tube equipped with an internal quartz wool plug for receiving the catalyst particles and a thermocouple for monitoring the reactor temperature. Inlet ports through which the catalyst, reactant gas, and purge gas, e.g., argon, are added are also provided, as well as an outlet port for venting the reactor.

Suitable carbon-containing gases include saturated hydrocarbons, e.g., methane, ethane, propane, butane, hexane, and cyclohexane; unsaturated hydrocarbons, e.g., ethylene, propylene, benzene, and toluene; oxygenated hydrocarbons, e.g., acetone, methanol, and tetrahydrofuran; and carbon monoxide. The preferred gases are ethylene and propane. Preferably, hydrogen gas is also added. Typically, the ratio of carbon-containing gas to hydrogen gas ranges from 1:20 to 20:1. Preferred catalysts are iron, molybdenum-iron, chromium-iron, cerium-iron, and manganese-iron particles deposited on fumed alumina.

To grow the fibrils, the reactor tube is heated to 550-850°C while being purged with, e.g., argon. When the tube is up to temperature (as measured by the thermocouple), the flow of hydrogen and carbon-containing gas is started. For a one inch tube, a hydrogen flow rate of about 100 ml/min. and a carbon-containing gas flow rate of about 200 ml/min. is suitable. The tube is purged with the reactant gases for at least 5 minutes at this rate, after which the catalyst falls onto the quartz wool plug. The reactant gases are then allowed to react with the catalyst throughout the reactor volume (typically for between 0.5 and 1 hour). After the reaction period is over, the flow of reactant gases is stopped and the reactor allowed to cool to room temperature under a carbon-free gas purge, e.g., argon. The fibrils are then harvested from the tube and weighed.

Typically, the fibril yield ratio is at least 30 times the iron content of the catalyst.

The above-described procedure produces a volume of carbon fibrils in which a useful amount (preferably at least 10%, more preferably at least 50%, and, even more preferably, at least 75%) of the fibrils have the following morphological features. They are vermicular graphitic tubes ranging in diameter from 3.5 to 75 nm with lengths ranging from at least 5 to more than 1000 times the diameters. The graphite layers making up the vermicular tubes are substantially parallel to the fibril axis, as described in more detail below. The fibrils are preferably also free of a continuous thermal carbon overcoat.

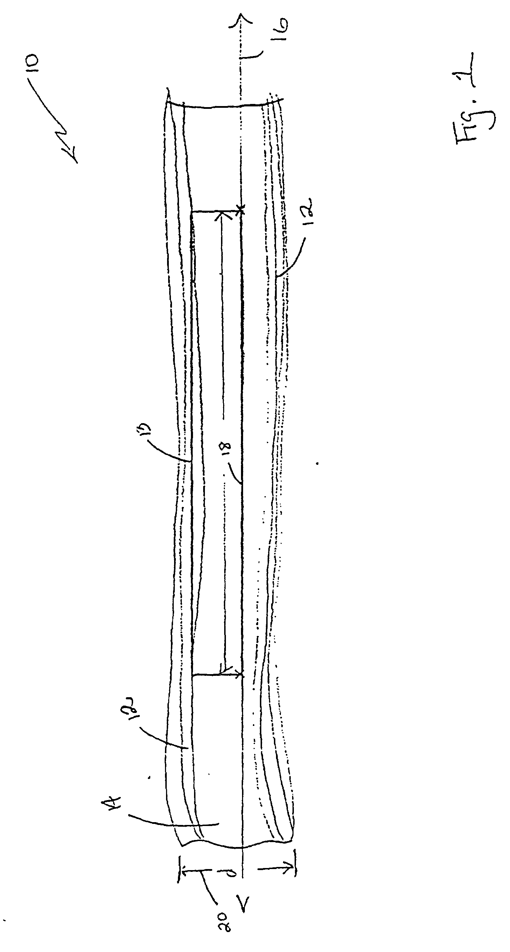

Fig. 1 depicts a carbon fibril 10 prepared as described above. Fibril 10 contains a hollow core region 14 surrounded by graphite layers 12 that are substantially parallel to fibril axis 16.

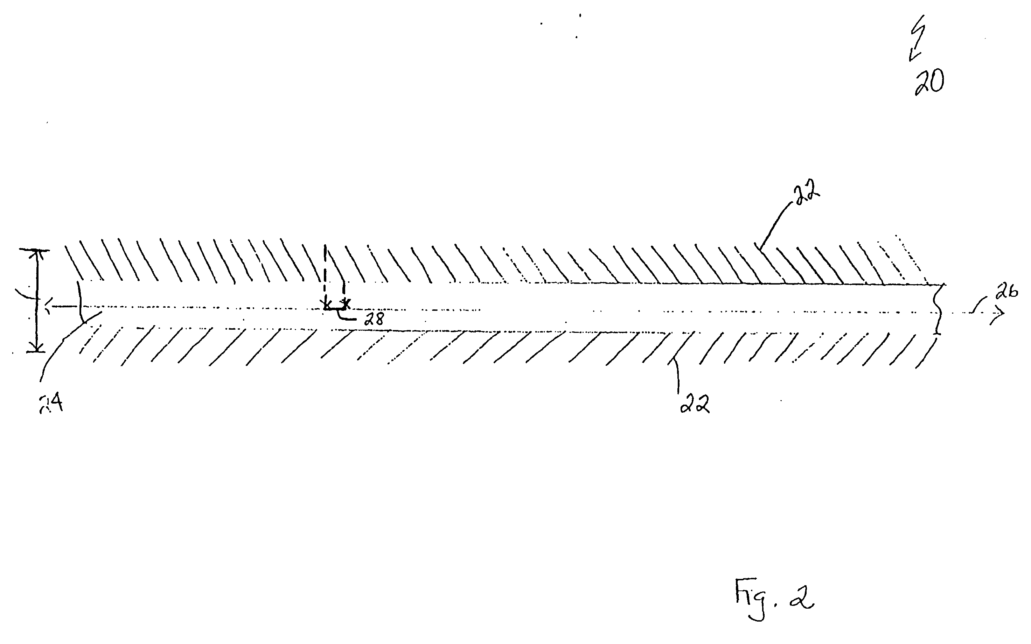

One aspect of substantial parallelism is that the projection 18 of a representative graphite layer 13 extends for a relatively long distance in terms of the external diameter 20 of fibril 10 (e.g., at least two fibril diameters, preferably at least five fibril diameters). This is in contrast to fibril 20 shown in Fig. 2. There, the projection 28 on fibril axis 26 of a graphite layer 22 surrounding hollow core 24 is considerably shorter than fibril diameter 30. This short projection gives rise to the fishbone-type morphology shown in Fig. 2, rather than the substantially parallel morphology shown in Fig. 1.

Fibril 10 shown in Fig. 1 is also free of a continuous thermal carbon overcoat. Such overcoats generally consist of pyrolytically deposited carbon resulting from thermal cracking of the gas feed used to prepare the fibrils. In the volume according to the invention at least 50 wt% of the fibrils are characterized in that the total surface area covered by the thermal overcoat is less than 50% (more preferably less than 25%, and even more preferably less than 5%).

### Example 2

Into a 3 L. round bottom flask was added 80.08 g of Degussa fumed alumina and 285 ml of methanol. The mixture was stirred to afford a thick paste before a solution of 78.26 g (.194 moles) of ferric nitrate nonahydrate and 4.00 g (.0123 moles) of molybdenum(VI) oxide bis(2,4-pentanedionate) in 300 ml of methanol (Fe to Mo atom ratio of 94:6) was added slowly. The thick paste which had collected on the sides of the flask was washed down with 65 ml of additional methanol and the mixture was stirred for 1 hour before house vacuum (28 in. Hg) was applied while stirring overnight. The purple-tinted solid was placed in a vacuum oven at 100°C (28 in. Hg (95 kPa)) for 29 hr. A total of 110.7 g of catalyst was obtained. The catalyst was ground and passed through an 80 mesh (177 µm) sieve prior to use. Analysis of the catalyst indicated 9.43% iron and .99% molybdenum.

A vertical furnace containing a I inch quartz tube with an internal quartz wool plug and thermocouple was equilibrated at 650°C under a down flow of 100 ml/min. hydrogen and 200 ml/min. ethylene. Into the tube (onto the quartz wool plug) was added .1044 g of the above-described catalyst. After 30 min., the ethylene flow was stopped and the oven was allowed to cool to near room temperature. A total of 1. 2434 g of fibrils was harvested for a yield ratio of 126 times the iron content of the catalyst.

### Example 3

A sample of catalyst from example 2 (1.6371 g) was placed in a horizontal furnace under argon and was heated to 300°C. After 30 min, at this temperature, the furnace was cooled and 1.4460 g of catalyst was recovered (12% wt. loss). This should leave 11.1% iron and 1.2% molybdenum in the catalyst.

A vertical tube furnace containing a 1 in. quartz tube with an internal quartz wool plug and thermocouple was equilibrated at 650°C under a 100 ml/min. down flow of hydrogen and 200 ml/min. flow of ethylene. Into the hot tube was added .1029 g of the catalyst described above. After 30 min., the ethylene flow was stopped and the oven was allowed to cool to near room temperature. A total of 1.3705 g of fibrils was isolated for a yield based on theoretical iron content of 120 times the iron content.

### Example 4

The vertical tube furnace described in example 2 was equilibrated at 700°C under the flow of 100 ml/min. hydrogen and 200 ml/min. propane. Onto the quartz wool plug was added .1041g of catalyst from example 2. After 30 min. the fuel gases were stopped and the product was cooled under argon. A total of .3993 g of fibrils was isolated for a yield of 41 times the catalyst iron content.

### Example 5

The procedure of example 4 was followed at 650°C using .1004g of catalyst from example 2. A total of .3179g of fibrils was harvested for a yield of 34 times the iron content of the catalyst.

### Example 6

Into a round bottom flask was added 4.25 g of Degussa fumed alumina and 30 ml of methanol. The mixture was mechanically stirred while a solution of 4.33 g (10.7 mmol) of ferric nitrate nonahydrate and .51 g (1.56 mmol) of molybdenum(VI)oxide bis(2, 4-pentanedionate) in 50 ml of methanol was slowly added. The mixture was stirred for 1 hour before the solvent was removed with the aid of a rotary evaporator. The resulting damp solid was vacuum dried at 105°C, 28 in. Hg for 18 hours. The resulting catalyst was ground and passed through an 80 mesh (177 µm) sieve. A total of 5.10 g of catalyst was obtained. Analysis of the catalyst indicated 9.04% iron and 2.18% molybdenum to be present.

Fibrils were prepared following the procedure of example 2 at 650°C using .0936 g of the above catalyst. A total of .9487 g of fibrils was isolated for a yield of 126 times the iron content by weight.

### Example 7

Into a round bottom flask was added 3.80 g of Degussa fumed alumina and 30 ml of methanol. The mixture was mechanically stirred while a solution of 4.33 g (10.7 mmol) of ferric nitrate nonahydrate and 2.04 g (6.25 mmol) of molybdenum(VI)oxide bis(2, 4-pentanedionate) in 100 ml of solvent was removed at 105°C and 28 in. Hg (95 kPa) for 17 hrs. The dried catalyst was sieved (80 mesh (177 µm)) to afford 6.10 g of powder. Analysis of the catalyst indicated 8.61% iron and 8.13% molybdenum by weight.

Fibrils were prepared following the procedure of example 2 at 650°C using .1000 g of the above catalyst. A total of .8816 g of fibrils was isolated for a yield of 102 times the iron content by weight.

### Example 8.

The procedure of example 7 was followed at 700°C using methane and .1016g of catalyst. A total of .0717g of fibrils were isolated for a yield of 8.2 times the iron content of the catalyst.

### Example 9

Into a 500 ml round bottom flask was placed 4.37 g of Degussa fumed alumina and 28 ml of methanol. To the stirred mixture was added a solution of 4.33 g (10.7 mmol) of ferric nitrate nonahydrate and .46 g (1.32 mmol) of chromium acetylacetonate in 75 ml of methanol. The mixture was stirred for 1 hr before it was dried for 18 hr at 105°C and 28 in. Hg (95 kPa). The catalyst was ground and sieved (80 mesh (177 µm)) to afford 5.57 g of powder. The theoretical metal content by weight was 11.9% iron and 1.4% chromium.

Fibrils were prepared following the procedure of example 2 at 650°C using .0976.g of the above catalyst. A total of .9487 g of fibrils was isolated for a yield of 82 times the theoretical iron content.

### Example 10

Into a 500 ml round bottom flask was placed 4.40 g of Degussa fumed alumina and 35 ml of methanol. To the thick paste was added 4.32g (10.7 mmol) of ferric nitrate nonahydrate in 35 ml of methanol. The mixture was stirred for 45 min. before the solid was dried at 95°C and 28 in. Hg (95 kPa) for 18 hr. The catalyst was ground and sieved (80 mesh (177 µm)).

Fibrils were prepared following the procedure of example 2 at 650°C using 0930 g of the above catalyst. A total of .4890 g of fibrils was isolated for a yield of 46 times the theoretical-iron content.

### Example 11

Into a round bottom flask was placed 4.33 g of Degussa fumed alumina in 30 ml of methanol. To the stirred paste was added a solution of 4.33 g (10.7 mmol) of ferric nitrate nonahydrate and .42 g (1:19. mmol) of ferric acetylacetonate in 50 ml of methanol. The mixture was stirred for 75 min. before drying at 105° and 28 in. Hg (95 kPa) for 17 hrs . The solid was ground and sieved (80 mesh (177 µm)) to afford 5.87 g of catalyst. Analysis showed 13.79% iron present in the catalyst.

Fibrils were prepared following the procedure of example 2 at 650°C using .0939 g of the above catalyst to afford .3962 g of fibrils. This corresponds to 31 times the theoretical iron content of the catalyst.

### Example 12

Into a round bottom flask was added 4.33g of Degussa fumed alumina in 20 ml of water followed by a solution of 4.33g (10.7 mmol) of ferric nitrate nonahydrate and .17g (.138 mmol) of ammonium molybdate in 40 ml of water. The mixture was mechanically stirred for 1 hour. The water was removed at reduced pressure at 40°C overnight. Final drying was accomplished at 140°C and 26 mm Hg (88 kPa) for 21 hours to afford 5.57 g of solid. Analysis of the catalyst showed 9.87% iron and 1.45% molybdenum to be present.

Fibrils were prepared following the procedure of example 2 at 650°C using .0794 g of catalyst to afford .8656g of fibrils. This corresponds to 111 times the iron content of the catalyst.

### Example 13

Into a round bottom flask, containing 4.33g of Degussa fumed alumina and 30 ml of methanol, was added a solution of 4.33g (10.7 mmol) of ferric nitrate nonahydrate and .16g (.368 mmol) of ceric nitrate in 50 ml of methanol. An additional 20 ml of methanol was used to wash all the salts into the flask. The mixture was stirred for one hour before the solvent was removed at reduced pressure. The solid was dried at 130°C and 27 mm Hg (91 kPa) for four days to afford 5.32g of catalyst. Analysis of the solid indicated 9.40% iron and .89% cerium to be present.

Fibrils were prepared followng the procedure of example 2 at 650°C using .0914g of catalyst to afford .7552g of fibrils. This corresponds to 88 times the iron content of the catalyst.

### Example 14

Into a round bottom flask was added 4.33g of Degussa fumed alumina and 30 ml of methanol. Onto the alumina was poured a solution of 4.33g (10.7 mmol) of ferric nitrate and .31g (1.22 mmol) of manganese(II) acetylacetonate in 50 ml of methanol. The solvent was removed at reduced pressure (27 mm Hg (91 kPa)) and the damp solid was vacuum dried at 140°C to afford 5.18g of solid. Analysis of the catalyst indicated 9.97% iron and 1.18% manganese.

Fibrils were prepared following the procedure of example 2 at 650°C using .070g of catalyst to afford .4948g of fibrils. This corresponds to 66 times the iron content of the catalyst.

### Example 15

Into around bottom flask was added 4.33g of Degussa fumed alumina and 30 ml of methanol. Onto the alumina was poured a solution of 4.33g (10.7 mmol) of ferric nitrate and .43g (1.22 mmol) of manganese(III) acetylacetonate in 50 ml of methanol. The solvent was removed at reduced pressure and the damp solid was vacuum dried at 140°C to afford 5.27g of solid. Analysis of the catalyst indicated 10.00% iron and 1.18% manganese.

Fibrils were prepared following the procedure of example 2 at 650°C using .0723g of catalyst to afford .7891g of fibrils. This corresponds to 110 times the iron content of the catalyst.

### Example 16

Degussa fumed alumina (400g) and deionized water (8.0L) were added to a 22 L flask equipped with a stirrer, pH meter and probe, and two 2 L addition funnels. One funnel contained an aqueous solution of ferric nitrate nonahydrate (511g dissolved in 5654 ml of water) and the other an aqueous solution of sodium bicarbonate (480g dissolved in 5700 ml of water).

The pH of the alumina slurry was first adjusted to 6.0 by adding the sodium bicarbonate solution to raise it or the ferric nitrate solution to lower it. Next, both solutions were added simultaneously over 3-4 hours with good agitation while maintaining the pH at 6.0. When the addition was complete, stirring was continued for an additional 1/2 hour, after which the slurry was filtered on a 32 cm Buchner funnel. The filter cake was then washed with deionized water and returned to the 22 L flask. Next, additional deionized water was added and the slurry stirred for another 1/2 hour. The batch was then filtered, washed with deionized water, and vacuum-dried at 100°C to constant weight (475g). Following drying, the final catalyst was prepared by grinding and sieving the product to -80 mesh (177 µm).

### Example 17

A four-inch (10 cm) quartz tube, closed on the bottom, was placed in a 4 inch diameter x 24 inch (10 cm x 61 cm) long furnace. The tube was purged with argon while being heated to 620°C. When the tube was hot, the gas feed was switched to a mixture of hydrogen (1.0 l/min) and ethylene (5.6 l/min) via a dip tube to the bottom of the 4 inch (10 cm) tube. After 5 min of purging, the catalyst addition was begun.

A total of 41.13g of catalyst, prepared as described in example 16, was added to the catalyst reservoir. The catalyst was added to the hot reactor in small portions (0.2g) over a period of approximately six hours. The reaction was allowed to run for an additional one hour and then cooled to room temperature under argon. The fibrils were removed from the tube and weighed. This batch gave 430g total yield.

### Example 18

The tube and furnace described in example 17 were heated to 650° under an argon purge. When the tube was hot the gas feed was switched to hydrogen and ethylene as described in example 17.

A total of 20.4g of catalyst (Fe-Mo) prepared as described in example 2 was added in a manner similar to that described in example 17. This batch gave a total yield of 255g.

### Example 19

The catalyst was prepared according to example 2, ground, and passed through a 500 mesh (25 µm) sieve. Analysis indicated 9.84% iron and 0.95% molydbenum, present in the catalyst.

A one inch diameter quartz tube containing a coarse quartz frit was positioned vertically in a furnace. The reactor was heated to a temperature of 630°C, as measured by a thermocouple positioned just below the quartz frit. Above the frit, the temperature was 20-40° higher, depending on the distance from the frit. The feed gas flow composition was 1390 ml/min of ethylene 'and 695 ml/min of hydrogen. Catalyst was injected into the reactor above the frit and allowed to react for 5 minutes. The product was purged from the reactor by quadrupling the gas flow for 10 seconds. Isolation of the product was accomplished via a cyclone. After a short re-equilibration time, the above procedure was repeated. After 23 cycles a yield of 22 times the iron content of the charged catalyst was obtained.

## Claims

1. A volume of carbon fibrils wherein at least 50wt% of said fibrils have a morphology consisting of hollow vermicular tubes that
(i) have graphitic layers that are substantially parallel to the fibril axis, wherein the length of the projection of graphitic layers on the fibril axis extends along the axis for a distance of at least two fibril diameters,
(ii) have a wall thickness between 0.1 and 0.4 times the external diameter of said fibrils,
(iii) have a diameter which does not vary by more than 15% over a length of at least three fibril diameters, and
(iv) have less than 50% of their surface areas covered by a continuous thermal carbon overcoat.

2. The fibril volume of claim 1, wherein the length of the projection of graphitic layers extends along the axis for a distance of at least five or more fibril diameters.

3. The fibril volume of claim 1, in which less than 25% of the surface area of said vermicular tubes is covered by a continuous thermal carbon overcoat.

4. The carbon fibril volume of claim 1, in which less than 5% of the surface area of said vermicular tubes is covered by a continuous thermal carbon overcoat.

5. A composite comprising the volume of carbon fibrils of claim 1 to 4 in a matrix.

6. The composite of claim 5 wherein said matrix comprises an organic polymer.

7. The composite of claim 6 wherein said polymer is a thermoset resin.

8. The composite of claim 7 wherein said thermoset resin is an epoxy, bismaleimide, polyimide or polyester resin.

9. The composite of claim 6 wherein said polymer is a thermoplastic resin.

10. The composite of claim 5 wherein said matrix comprises an inorganic polymer.

11. The composite of claim 5 wherein said matrix comprises a metal.

12. The composite of claim 5 further comprising carbon black, silica, or a combination thereof.

13. The composite of claim 5 wherein said matrix comprises an elastomer.

14. The composite of claim 13 wherein said elastomer is styrene-butadiene rubber or cis-1,4-polybutadiene.

## Patentansprüche

1. Bündel aus Kohlenstoffibrillen, worin mindestens 50 Gew.% der Fibrillen eine Morphologie aufweisen, die aus hohlen vermikularen Röhren bestehen, die
(i) Graphitschichten aufweisen, die im wesentlichen parallel zur Fibrillenachse verlaufen, worin sich die Länge der Projektion der Graphitschichten auf die Fibrillenachse entlang der Achse über eine Distanz von mindestens zwei Fibrillendurchmessern erstreckt,
(ii) eine Wanddicke vom 0,1- bis 4-fachen des äusseren Durchmessers der Fibrillen aufweisen,
(iii) einen Durchmesser aufweisen, der über eine Länge von mindestens drei Fibrillendurchmessern um nicht mehr als 15 % variiert und
(iv) auf weniger als 50 % ihrer Oberfläche mit einem kontinuierlichen thermischen Kohlenstoffüberzug bedeckt sind.

2. Fibrillenbündel gemäss Anspruch 1, worin sich die Länge der Projektion der Graphitschichten entlang der Achse über eine Distanz von mindestens 5 oder mehr Fibrillendurchmessern erstreckt.

3. Fibrillenbündel gemäss Anspruch 1, worin weniger als 25 % der Oberfläche der vermikularen Röhren mit einem kontinuierlichen thermischen Kohlenstoffüberzug bedeckt sind.

4. Kohlenstoffibrillenbündel gemäss Anspruch 1, worin mindestens 5 % der Oberfläche der vermikularen Röhren mit einem kontinuierlichen thermischen Kohlenstoffüberzug bedeckt sind.

5. Verbundstruktur, die das Kohlenstoffibrillenbündel gemäss Ansprüchen 1 bis 4 in einer Matrix umfasst.

6. Verbundstruktur gemäss Anspruch 5, worin die Matrix ein organisches Polymer umfasst.

7. Verbundstruktur gemäss Anspruch 6, worin das Polymer ein warmhärtendes Harz ist.

8. Verbundstruktur gemäss Anspruch 7, worin das warmhärtende Harz ein Epoxy-, Bismaleimid-, Polyimidoder Polyesterharz ist.

9. Verbundstruktur gemäss Anspruch 6, worin das Polymer ein thermoplastisches Harz ist.

10. Verbundstruktur gemäss Anspruch 5, worin die Matrix ein anorganisches Polymer umfasst.

11. Verbundstruktur gemäss Anspruch 5, worin die Matrix ein Metall umfasst.

12. Verbundstruktur gemäss Anspruch 5, die ferner Kohlenstoffschwarz, Silica oder eine Kombination daraus umfasst.

13. Verbundstruktur gemäss Anspruch 5, worin die Matrix ein Elastomer umfasst.

14. Verbundstruktur gemäss Anspruch 13, worin das Elastomer Styrol-Butadien-Gummi oder cis-1,4-Polybutadien ist.

## Revendications

1. Volume de fibrilles de carbone dans lequel au moins 50 % en poids desdites fibrilles ont une morphologie qui est constituée de tubes vermiculaires creux qui
(i) ont des couches de graphite qui sont sensiblement parallèles à l'axe des fibrilles, où la longueur de la projection des couches de graphite sur l'axe des fibrilles s'étend le long de l'axe sur une distance d'au moins deux diamètres de fibrille,
(ii) ont une épaisseur de paroi située entre 0,1 et 0,4 fois le diamètre externe desdites fibrilles,
(iii) ont un diamètre qui ne varie pas de plus que 15 % sur une longueur d'au moins trois diamètres de fibrille, et
(iv) ont moins de 50 % de leurs aires surfaciques recouvertes d'un revêtement de carbone thermique continu.

2. Volume de fibrilles selon la revendication 1, dans lequel la longueur de la projection des couches de graphique s'étend le long de l'axe sur une distance d'au moins cinq diamètres de fibrille ou plus.

3. Volume de fibrilles selon la revendication 1, dans lequel moins de 25 % de l'aire surfacique desdits tubes vermiculaires est revêtue d'un revêtement de carbone thermique continu.

4. Volume de fibrilles de carbone selon la revendication 1, dans lequel moins de 5 % de l'aire surfacique desdits tubes vermiculaires est revêtue d'un revêtement de carbone thermique continu.

5. Composite comprenant le volume des fibrilles de carbone selon la revendication 1 à 4 dans une matrice.

6. Composite selon la revendication 5, dans lequel ladite matrice comprend un polymère organique.

7. Composite selon la revendication 6, dans lequel ledit polymère est une résine thermodurcie.

8. Composite selon la revendication 7, dans lequel ladite résine thermodurcie est une résine époxy, bismaléimide, polyimide ou polyester.

9. Composite selon la revendication 6, dans lequel ledit polymère est une résine thermoplastique.

10. Composite selon la revendication 5, dans lequel ladite matrice comprend un polymère inorganique.

11. Composite selon la revendication 5, dans lequel ladite matrice comprend un métal.

12. Composite selon la revendication 5, comprenant, en outre, du noir de carbone, de la silice ou une combinaison de ceux-ci.

13. Composite selon la revendication 5, dans lequel ladite matrice comprend un élastomère.

14. Composite selon la revendication 13, dans lequel ledit élastomère est un caoutchouc styrène-butadiène ou cis-1,4-polybutadiène.
